# EUROPEAN PATENT APPLICATION

(11) **EP 4 722 796 A1**
(43) Date of publication of application: **08.04.2026**
(21) Application number: 24383061.9
(22) Date of filing: 01.10.2024
(51) Int. Cl.: G02F 1/01

(54) **DEVICE FOR EMITTING INFRARED RADIATION, SYSTEM COMPRISING THE DEVICE, USE OF THE DEVICE, AND METHOD FOR FABRICATING THE DEVICE**

(71) Applicant: Fundació Institut de Ciències Fotòniques, 08860 Castelldefels (Barcelona) (ES); Rheinisch-Westfälische Technische Hochschule Aachen, abgekürzt RWTH Aachen, Körperschaft des öffentlichen Rechts, 52062 Aachen (DE)
(72) Inventor: GITEAU, Maxime, CASTELLDEFELS, BARCELONA (ES); PAPADAKIS, Georgia Theano, CASTELLDEFELS, BARCELONA (ES); CONRADS, Lukas, Aachen (DE); TAUBNER, Thomas, Aachen (DE)
(74) Representative: Balder IP Law, S.L.

(57) **Abstract**

A device for emitting infrared radiation, the device comprising the following layers which are arranged in order as follows: a first layer (1) made of a phase change material which is changeable between a first phase at which the phase change material transmits an infrared radiation, and a second phase at which the phase change material is opaque to the infrared radiation; a second layer (2) made of an emitter material configured to emit the infrared radiation; a third layer (3) made of a material which transmits the infrared radiation; a fourth layer (4) configured to reflect the infrared radiation. Also, a system comprising the device and phase change inducing means configured to induce a change of the phase change material between the first phase and the second phase. Also, use of the device, and a method for fabricating the device.

## Description

### TECHNICAL FIELD

The present invention relates to a device for emitting infrared radiation. Said device may also be called infrared emitter. The present invention is also related to a system comprising the device, and a method for fabricating the device. Also, the present invention is related to a use of the device.

### STATE OF THE ART

There are known conventional devices for emitting infrared radiation, particularly longwave infrared (LWIR) or middle wavelength infrared (MWIR) radiation. MWIR is typically defined as the 3.0 - 5.0 µm (micrometer) wavelength range, and LWIR is typically defined as the 8.0 - 14.0 µm wavelength range. However, the known conventional devices for emitting infrared radiation suffer from the following drawbacks. A problem with the conventional devices for emitting LWIR or MWIR radiation is that they are typically broadband, and do not offer a narrowband light emission. In addition, typically said conventional devices do not offer a diffuse emission of the infrared radiation, and instead their emission is highly directional. Moreover, typically said conventional devices rely on respective technologies which do not allow for tuning a central wavelength of the radiation emitted by the device. Also, a lot of said conventional devices are very energy consuming and are expensive and complex to fabricate. For example, although there are known quantum cascade lasers (QCLs) which offer a relatively narrow emission in the MWIR or LWIR, these lasers consume significant amounts of electrical energy for producing the emitted radiation, they do not offer a diffuse emission, they are complex to fabricate, and they can be prohibitively expensive for several applications. In addition, several of the existing conventional types of MWIR or LWIR sources for being made require the use of complex fabrication techniques such as lithography, and do not offer the ability for be turned on/off in a non-volatile manner. Also, it is noted that there is a lack of commercially available light emitting diodes (LEDs) in the LWIR..

Therefore, there is a need for devices for emitting infrared radiation that overcome the drawbacks of the conventional ones.

### DESCRIPTION OF THE INVENTION

The present invention overcomes the drawbacks of several known conventional devices for emitting infrared radiation. In particular, the present invention allows for achieving emission of infrared radiation in a simple yet efficient and controllable way, with the ability to turn the emission on and off, and without requiring the consumption of electrical energy for producing the emitted radiation. Moreover, the present invention advantageously allows for achieving the infrared emission at ambient temperature. Also, at least some embodiments of the present invention advantageously allow for achieving a relatively narrowband infrared emission, e.g. the emission of infrared radiation whose spectral distribution has a full width half maximum (FWHM) of 2 µm (micrometers) or less and wherein said radiation is substantially in the LWIR and/or the MWIR spectral range, is diffuse, polarization independent and with a high emissivity, e.g. with an emissivity of more than 0.5 or even close to 1 within the FWHM region of the spectral distribution when the value of the emissivity is defined on a scale from 0 to 1. Also, the present invention may allow for advantageously controlling and tailoring a central wavelength and width of the spectral emission. Moreover, advantageously, the present invention is not complex to implement. Consequently, the present invention may advantageously be used for several different purposes and applications, particularly security and labelling applications for which several of the known conventional infrared emitters are complex and unsuitable or prohibitively expensive to use.

A first aspect of the invention concerns a device for emitting infrared radiation, the device comprising the following layers which are arranged in order as follows: a first layer, a second layer, a third layer and a fourth layer. The first layer is made of a phase change material which is changeable between a first phase at which the phase change material transmits an infrared radiation, and a second phase at which the phase change material is opaque to the infrared radiation. The second layer is made of an emitter material which is configured to emit the infrared radiation. The third layer is made of a material which transmits the infrared radiation. The fourth layer is configured to reflect the infrared radiation.

From the above it may be understood that an operation of the device of the first aspect of the invention relies on the emission of the infrared radiation by the emitter material. It may be understood that said radiation is thermal radiation i.e. the emitter material passively emits the radiation due to its temperature, without requiring any external excitation. It may be further understood that at least part of the infrared radiation is emitted by the emitter material towards the third layer, is transmitted through the material of the third layer and reaches the fourth layer where it is reflected towards the first layer. It can be understood that when the infrared radiation reaches the first layer it may or may not be transmitted through the first layer depending on whether the phase change material of the first layer is at the first or at the second phase. When the phase change material is at the first phase, then the infrared radiation will be transmitted through the first layer and will be emitted towards outside the device. However, when the phase change material is at the second phase, then the transmission of the infrared radiation through the first layer will be partially or, preferably, completely blocked because the phase change material by being opaque to the infrared radiation will not be transparent to the latter. Hence, when the phase change material (PCM) is at the first phase, this may correspond to an "on" state of the device or of a part of the device wherein the PCM is at the first phase, while when the phase change material is at the second phase, this may correspond to an "off" state of the device of a part of the device wherein the PCM is at the first phase. Therefore, a switching of the phase change material between the first and the second phase, allows for advantageously switching on and off the device or parts of the device.

In a preferred embodiment of the first aspect of the invention, the infrared radiation is in the LWIR region, and the phase change material of the first layer is configured such that a radiance of the device via the first layer when the phase change material is at the second phase is below 20% of a peak emission of the device over the LWIR region when the phase change material is at the first phase. It may be understood that said peak emission refers to the emission of the infrared radiation towards outside the device via the phase change material of the first layer when said phase change material is at the first phase. Hence, in the latter embodiment the device or parts thereof may advantageously exhibit a high on/off contrast.

As mentioned further above, the phase change material is changeable (switchable), i.e. it can transition, between the first phase and the second phase. In a preferred embodiment of the invention, a transition of the phase change material between the first phase and the second phase is non-volatile. Advantageously, when said transition is non-volatile, this allows for the aforementioned "on" and "off" states of the device to be stable, and also facilitates reversibly switching the device between the "on" and the "off" states while the device remaining at a room temperature.

In some preferred embodiments of the invention the phase change material is or comprises indium antimony telluride or vanadium dioxide. Vanadium dioxide (i.e. VO₂) may advantageously exhibit a dielectric-to-metallic phase transition depending on the surrounding temperature, which allows vanadium dioxide to transmit at least some infrared radiation when the material is at its dielectric phase, and to at least partially block the infrared radiation when the material is at its metallic phase. Indium antimony telluride (e.g. In₃SbTe₂) typically is a non-volatile phase change material. Indium antimony telluride typically exhibits a metallic-to-dielectric phase change with a high negative permittivity (metallic behavior) in the crystalline phase and a constant, lossless permittivity in the amorphous phase. Hence, in a very preferred embodiment of the invention wherein the phase changing material is made of indium antimony telluride (In₃SbTe₂), the latter contributes to achieving a high emissivity from the first layer when the indium antimony telluride is at its amorphous phase at which it transmits the infrared radiation, and a very low emissivity from the first layer when the indium antimony telluride is at a crystalline phase at which it reflects the infrared radiation thereby blocking the transmission of the infrared radiation via the first layer towards outside the device. It is noted that the phase change material may also be made of a different material compared to the aforementioned ones, or it may comprise more than one material.

In a preferred embodiment of the invention, the phase change material is configured to change between the first phase and the second phase under an application of heat or electric current or radiation to the phase change material, more preferably said radiation being laser radiation. When the transition of the phase change material between the first and the second phase can be induced by the application of heat or radiation, this facilitates the wide scale implementation of the invention because there are several known methods and devices suitable for controllably and accurately heating and/or irradiating layers and phase change materials at a large scale. Moreover, when said transition of the phase change can be induced by the application of heat or radiation, this allows for locally heating and/or irradiating the phase changing material (PCM) for thereby selectively inducing a phase change of the PCM at certain parts (portions, regions) of the first layer, so that some regions of the first layer are at the first phase and exhibit a first emissivity of infrared radiation, and some other regions of the first layer are the second phase and exhibit a second emissivity which is lower that first emissivity. This way the infrared emission of the device via the device's first layer may be spatially patterned and this, as described further below, may be particularly useful in certain security or labelling applications of the device of the first aspect of the invention.

In some preferred embodiments of the invention, the emitter material is a polar material which has (i.e. exhibits) an optical phonon resonance. More preferably the emitter material comprises any of silicon dioxide, silicon carbide, silicon nitride, aluminum oxide, aluminum nitride, hexagonal boron nitride, alpha-phase molybdenum trioxide, or a combination thereof. Alternatively, in some preferred embodiments of the invention, the emitter is a doped semiconductor which has (i.e. exhibits) a plasmon resonance. More preferably the emitter material comprises any of one or more transparent conductive oxides, indium tin oxide, aluminum zinc oxide, germanium, silicon, gallium arsenide, indium arsenide, or graphene. Advantageously several of the aforementioned materials are made of abundant elements and can be fabricated at an industrial scale, and this can facilitate a potential wide scale implementation of the invention. Also, the aforementioned materials may advantageously exhibit different resonances in the longwave infrared (LWIR) region or in the region from the middle wavelength infrared (MWIR) to the LWIR, wherein MWIR is typically defined as the 3.0 - 5.0 µm (micrometer) wavelength range, and LWIR is typically defined as the 8.0 - 14.0 µm wavelength range. For example, in a very preferred embodiment where the emitter material is SiO₂, the latter exhibits a resonance peak in the spectral region around 9.5 micrometers. Also, in an embodiment where the emitter material is SiC, the latter exhibits a resonance peak in the spectral region around 12 micrometers. Also, in an embodiment where the emitter material is Al₂O₃, the latter exhibits resonance peaks in the spectral regions around 10 micrometers and 20 micrometers. Also, in an embodiment where the emitter material is hexagonal boron nitride (hBN), the latter exhibits resonance peaks in the spectral region around 7 micrometers. Hence, using any of the aforementioned emitter materials or a combination thereof for making the second layer of the device may advantageously allow for tailoring a central wavelength of a spectral width of the thermal radiation emitted by the device. In addition, in relation to the aforementioned preferred embodiment where the emitter material is SiO₂, it is noted that the latter's resonance peak around 9.5 µm is close to the thermal wavelength near room temperature, and this can contribute to maximizing the power emitted by the device at room temperature. Indeed, said thermal wavelength at room temperature is the wavelength at which the radiation curve of the blackbody at room temperature peaks. It is also noted that the use of silicon carbide or hexagonal boron nitride or alpha molybdenum oxide as the emitter material in some embodiments may advantageously result to achieving a relatively narrowband emission e.g. an emission with a FWHM of less than 2 µm.

In some preferred embodiments of the invention, a central wavelength of a spectral width of the infrared radiation is comprised between 7 µm and 40 µm. More preferably said central wavelength is comprised between 8 µm and 14 µm. This way said central wavelength, which may also be called central wavelength of the operation of the device, may be in the LWIR region which is of interest for many different applications. Moreover, the blackbody radiation curve at room temperature peaks in the region from 8 µm and 14 µm, and when the central wavelength is in the same region, this may advantageously contribute to optimizing and maximizing the power emitted by the device at room temperature. The spectral region at and around the wavelength at which the blackbody radiation at any given temperature peaks may be called spectral region of maximum emission of the blackbody radiation. The overall emissivity of the device may be further optimized and maximized in the optional case that said region of maximum emission of the blackbody at any given temperature covers not only the central wavelength of the infrared radiation which is emitted by the device, but also the spectral width of the emitted infrared radiation at that temperature. Said spectral width may refer to the width of the entire spectral region at which the intensity of the spectral radiation is significant or, preferably, may refer to the FWHM of the spectral distribution of the emitted infrared radiation. Hence, in a preferred embodiment of the first aspect of the invention, a spectral width of the infrared radiation covers a spectral region of maximum emission of a blackbody radiation by the emitter material, more preferably a central wavelength of the spectral width being within said spectral region of maximum emission, most preferably the blackbody radiation being at a room temperature comprised between 20°C to 25°C.

In some very preferred embodiments of the invention, said infrared radiation is in the LWIR and/or MWIR regions of the electromagnetic spectrum.

In a preferred embodiment of the invention, the first layer, the second layer, the third layer and the fourth layer form a Fabry-Perot cavity, and the infrared radiation comprises a radiation component at a frequency which is equal to a resonance frequency of the Fabry-Perot cavity. In the latter case, more preferably said radiation component is a wavelength which is equal to a central wavelength of the infrared radiation, and most preferably said radiation component and the resonance frequency of the Fabry-Perot cavity are equal to a resonance frequency of the emitter material. It may be understood that the infrared radiation as it is being transmitted through each of the third layer, the second layer and the first layer when the PCM is at its first phase, may be transformed such that the spectral distribution and intensity of the infrared radiation that is emitted via the first layer towards outside the device when the PCM is at the first phase, will depend on each of the layers and on the overall device structure that is formed by said layers. Hence, the material, the thickness, the form and other properties of the device's layers may be configured such that the overall structure formed by said layers is used as means for tailoring the infrared emission by the device. In particular, if said layers form (i.e. are configured to form) a Fabry-Perot cavity, the latter may selectively promote the emission of infrared radiation of a frequency which meets the condition of being equal or close to a resonance wavelength/frequence of the cavity, and also the Fabry-Perot cavity may suppress the emission of radiation components which do not meet the condition. Hence, the Fabry-Perot cavity may contribute to advantageously achieving a narrowband infrared emission with a high emissivity from the device, especially when the resonance wavelength of the cavity is the central wavelength of the operation of the device. If in addition, the aforementioned resonance frequency of the Fabry-Perot cavity is equal to a resonance frequency of the emitter material, then this may advantageously further contribute to achieving a narrowband emission from the device, and to enhancing the device's emissivity at the resonance frequency of the emitter material.

In a preferred embodiment of the first aspect of the invention, the first layer, the second layer, the third layer and the fourth layer of the device are planar. In the latter case, advantageously the fabrication of the device does not require the use of complex and potentially costly lithographic patterning techniques for the formation of the layers and of the overall device. Moreover, when said layers are planar, flat, have respective level surfaces and continue in all directions of a plane of the device, this may advantageously contribute to achieving a narrowband, strong and polarization-independent emission from the device. A narrowband emission may be an emission where the full width at half maximum value of a spectral distribution of the emitted infrared radiation is equal to or less than 2 µm. Such a narrowband, polarization-independent, emission may be achieved in the preferable case that the first, the second, the third and the fourth layers of the device form a Fabry-Perot cavity as mentioned further above. Moreover, when said layers are planar this may advantageously contribute to achieving a wide angle or diffuse emission from a surface of the device's first layer such that the infrared radiation is detectable with respect to said surface at any incidence angle α from 0 degrees up to a wide angle e.g. up to 50 degrees. Also, said emission may be considered as being strong when the emissivity of the device from the first layer is more than 0.5 or more than 0.8. Hence, in a preferred embodiment of the invention, the first layer, the second layer, the third layer and the fourth layer are configured to cause that, when the phase change material is in the first phase, the infrared radiation is emitted via a surface of the first layer towards outside the device such that a full width at half maximum value of a spectral distribution of the emitted infrared radiation is 2 µm or less. Also, in a preferred embodiment of the invention, the first layer, the second layer, the third layer and the fourth layer are configured to cause that, when the phase change material is in the first phase, the infrared radiation in a spectral band from a first wavelength to a second wavelength, the difference between the second wavelength and the first wavelength being the full width at half maximum value, is emitted via the surface with an emissivity of more than 0.5 or, preferably, more than 0.8. Also, in a preferred embodiment of the invention, the first layer, the second layer, the third layer and the fourth layer are configured to cause that, when the phase change material is in the first phase, the infrared radiation is emitted, towards outside the device, via a surface of the first layer such that the infrared radiation is detectable with respect to said surface at any incidence angle α from 0 degrees to at least 50 degrees or, preferably, to at least 75 degrees. Also, in a preferred embodiment of the invention, the first layer, the second layer, the third layer and the fourth layer are configured to cause that, when the phase change material is in the first phase, the infrared radiation is emitted, towards outside the device, via a surface of the first layer such that the infrared radiation is detectable with respect to said surface at any polarization.

In a preferred embodiment of the invention, a thickness of the first layer is comprised between 10 nm and 200 nm, a thickness of the second layer is comprised between 2 nm and 300 nm, a thickness of the third layer is comprised between 1 µm and 5 µm, and a thickness of the fourth layer is at least 30 nm. In the previous embodiment, the aforementioned thicknesses of the second and the third layers by being within the respective aforementioned ranges, can advantageously contribute to achieving that a central wavelength of operation of the device is equal or around a desired value, wherein said desired value may be a resonance wavelength of the emitter material and/or the wavelength at which the radiation curve of a blackbody at room temperature peaks. Also, when the thickness of the fourth layer is at least 30 nm, this may advantageously contribute to preventing the occurrence of a transmission through the fourth layer of the infrared radiation that is produced in the device, because such a transmission of the radiation through the fourth layer may result to a corresponding drop in the performance of the device. Also, when the thickness of the first layer is at least 10 nm, this may advantageously contribute to achieving a good "on"/ "off" contrast in the device's emissivity, whereas when the thickness of the first layer is no more than 200 nm, this may advantageously facilitate the ability of a user of the device to trigger a phase transition of the PCM through the whole thickness of the first layer.

As mentioned further above, the device of the first aspect of the invention comprises the third layer which is made of a material which transmits the infrared radiation. It may be understood that since the third layer, which is between the second layer and the fourth layer, transmits the infrared radiation within the device, it acts as an optical spacer. Hence, the third layer may also be called spacer, and/or the third layer's material which transmits the infrared radiation may also be called spacer material. In a preferred embodiment of the invention, a refractive index of the material (i.e. the space material) of the third layer of the device is higher than 3 (i.e. the value of the refractive index is equal to or more than 3). A spacer material with a refractive index of 3 or more may be called high-index material, and the optional use of a high-index material for forming the third layer of the device of the first aspect of the invention may advantageously contribute to achieving a diffuse emission with an emissivity which changes less with angle compared to when the spacer material is a low-index material. In a very preferred embodiment of the invention, the third layer is made of germanium (Ge). Germanium is a high-index material, and its optional use for forming the third layer of the device may advantageously allow for minimizing the required spacer thickness and for achieving an emissivity which remains relatively angle-independent up to at least 50 degrees and is identical for both polarizations. However, it is noted that alternatively the spacer material may be a low-index material, i.e. a material with a refractive index of less than 3. The optional use of a low-index material for forming the third layer of the device of the first aspect of the invention may contribute to achieving a directional emission.

As mentioned further above, the fourth layer of the device of the first aspect of the invention is configured to reflect the infrared radiation. In some preferred embodiments of the invention, said fourth layer comprises a metallic material which reflects the infrared radiation, and/or the fourth layer comprises a Bragg mirror which reflects (i.e. is configured to reflect) the infrared radiation. Preferably, the aforementioned metallic material may comprise any of gold, silver, aluminum or another metal. The optional use of a metal for forming the fourth layer may allow for minimizing the thickness of the fourth layer and for fabricating the fourth layer with non-complex techniques that can be implemented at the industrial scale.

In a preferred embodiment which in this text is called "exemplary embodiment" of the first aspect of the invention, the first layer comprises first regions and second regions, wherein in the first region the phase material is at the first phase, and in the second regions the phase material is at the second phase. Preferably, said first and second regions form one or more patterns. Hence, said exemplary embodiment may be used for storing or encoding therein information in the form of patterns formed by the aforementioned first and second regions. With respect to the exemplary embodiment, it is noted that considering that the device's infrared radiation that is emitted via the first regions depends on the temperature of the device, one (i.e. a person) by measuring, preferably by a thermal camera, the radiation that is emitted via the first layer and the first regions located thereat, can assign a corresponding temperature to each of said first regions. Accordingly, in a preferred embodiment which is according to the exemplary embodiment, the emitted infrared radiation is LWIR radiation, a temperature of the first regions, wherein the said temperature is measured by a thermal camera which is sensitive to (i.e. can detect) the emitted LWIR radiation and is located at an incidence angle with respect to a surface of the first layer, i.e. the first layer's surface via which the radiation is emitted towards outside the device, is substantially the same for all incidence angles from 0 degrees to 45 degrees or to 75 degrees. The incidence angle mentioned above with respect to the location of the detector, may also be called detection angle. In this text, saying that the temperature of the first regions is substantially the same for different incidence angles as mentioned above preferably means that said temperature as measured (via the thermal camera) does not vary by more than 20% or, more preferably, 10%, or, most preferably, 5% for the different incidence angles.

Regarding the exemplary embodiment, the ability of encoding in the device information in the form of a pattern that is readable via a technique for the detection of the infrared radiation emitted by the device whatever its orientation, and the fact that the generation and emission of the infrared radiation by the device at room temperature does not require the consumption of electrical energy, allows for the device of said exemplary embodiment to be used for a variety of applications, such as for example as a security or labelling or tracking tag. For example, an embodiment which is according to the exemplary embodiment and wherein there is a characteristic pattern formed by the aforementioned said first and second regions of the first layer, could be attached to another item, e.g. to a consumer good, so that said item can be tracked or be authenticated via a detection, e.g. via a detection made with a thermal camera, of said pattern.

The device of the first aspect of the invention may optionally comprise additional layers or other components. In particular, the device may preferably comprise a substrate on which the fourth layer is formed. It is noted that said substrate may be rigid or flexible. Also, it is noted that optionally the device may comprise additional layers anywhere in between or outside of or attached to the aforementioned first, second, third and fourth layers. For example, the device may comprise one or more adhesion layers located in between any or attached to any of the first, second, third and third layers, or may comprise other type of additional layers. Also, optionally any of the aforementioned first, second, third and fourth layers of the device may comprise respective sub-layers. Also, optionally, a material of any of the aforementioned first, second, third and fourth layers of the device, or any of said layers, may respectively comprise two or more different materials.

The device of the first aspect of the invention may optionally comprise a capping layer which covers the first layer such that the latter is between the second layer and the capping layer. This optional capping layer may also be called a protection layer and may advantageously prevent or inhibit degradation of the first layer, for example, by protecting the first layer from one or more atmospheric conditions such as humidity, oxygen, UV radiation, rain, etc. Hence, the optional protection layer may advantageously promote and improve an operational stability and endurance of the device. Therefore, in a preferred embodiment of the invention, the device further comprises a protection layer which is in contact with the first layer, the latter (i.e. the first layer) is between the protection layer and the second layer, and more preferably the protection layer is configured to protect the first layer against any of humidity, oxygen, UV radiation, rain.

The present invention in a second aspect concerns the use of the device of the first aspect of the invention. A device of the first aspect of the invention can be used in several different applications. In a preferred embodiment of the second aspect of the invention, the device is used as a source of infrared radiation. Such a source of infrared radiation may be used in a variety of different applications such as for example in the detection of gases. Infrared radiation sources are commonly used in the detection of gases. Gases may be detected via a method known as infrared gas detection or infrared spectroscopy of gases, and that method leverages the principle that different gases absorb specific wavelengths of infrared light. Hence, in a preferred embodiment of the second aspect of the invention, the device of the first aspect of the invention is used for the detection of gases.

In another preferred embodiment of the second aspect of the invention, a device of the first aspect of the invention is used for storing therein information in the form of a pattern made of first regions and second regions of the first layer, as in the aforementioned exemplary embodiment of the first aspect of the invention. Also, in another embodiment, a device according to the exemplary embodiment of the first aspect of the invention is used as a label (i.e. a tag) attachable to a product for tracking or marking said product or for preventing the counterfeiting of said product. If the infrared radiation is detectable by a thermal camera, it may be possible to detect and "read" said label with the thermal camera. Likewise, such a label may be used for verifying that the product has originated from a particular manufacturing facility and from a process used in said facility for the manufacturing of the product. Also, in another embodiment, a device according to the exemplary embodiment of the first aspect of the invention is used as a label for a product, wherein said label can be dynamically modified to mark therein information related to the processing, handling and/or history of the product. In the latter case, during the processing or handling of the product, the device acting as the product's label may be dynamically modified via the modification of a pattern formed by the first regions and second regions, and such modification may comprise applying laser radiation or heat on the label for converting some of the first regions into second regions, and/or converting some of the second regions into first regions. Also, it may be understood that the information marked in the label may comprise an indication that a certain step has been performed in the processing or handling of the product, or the marked information may comprise information regarding one or more details of a performed step, or may comprise information related to the history of the product.

The present invention in a third aspect concerns a system which comprises a device of the first aspect of the invention, and the system further comprises phase change inducing means configured to induce a change of the phase change material between the first phase and the second phase. Preferably said phase change inducing means comprise a laser or a heater. Said laser may produce a laser beam for irradiating the first layer of the device, such that said laser beam upon hitting a region of the first laser can cause a transition of the PCM between the fist and the second phase. Likewise, the heater may be able to heat the device's first layer and cause a transition of the PCM between the first and the second phase.

In a preferred embodiment of the first aspect of the invention, the phase change inducing means is configured to induce the change of the phase change material locally and selectively at one or more regions of the first layer for, thereby, forming a pattern at the first layer. Said pattern may be formed by first regions and/or second regions in the first layer, wherein in the first regions the PCM is at the first phase and in the second regions the PCM is at the second phase.

In a preferred embodiment of the third aspect of the invention, the system is a radiation source wherein the phase change inducing means is used for switching the device or parts thereof "on" and "off". In other preferred embodiments of the third aspect of the invention, the system is for patterning the first layer of the device, or for storing or encoding information in the device, or for patterning the device.

A fourth aspect of the invention concerns a method for fabricating a device which is according to the first aspect of the invention, the method comprising: providing the fourth layer; depositing the third layer on the fourth layer; depositing the second layer on the third layer; and depositing the first layer on the second layer. In this text the term "depositing" may also be understood as meaning "forming". Optionally, the fourth layer may be provided as a stand-alone layer or, preferably, may be provided as a layer deposited on and supported by a substrate. Hence, in a preferred embodiment of the fourth aspect of the invention, the method step of providing the fourth layer comprises: providing a substrate; and depositing the fourth layer on the substrate. Said substrate may preferably be rigid or flexible. The optional use of a flexible substrate may advantageously allow for the overall device to be flexible and bendable.

In the method according to the fourth aspect of the invention, preferably the deposition, i.e. the formation, of any of the aforementioned first, second, third or fourth layers is done via any of sputtering, atomic layer deposition, thermal or e-beam evaporation, or another chemical or physical deposition technique. The optional use of any of the aforementioned specific techniques or of a combination thereof for the fabrication of the device, may advantageously facilitate the large-scale production and deployment of the invention.

It may be understood that any optional or preferable features mentioned herein with respect to the first aspect of the invention, may correspond to respective optional or preferable features of any of the second, third or fourth aspects of the invention, and vice versa.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a cross section of a preferred embodiment of a device according to the first aspect of the invention.
Fig. 2 illustrates a cross section of a preferred embodiment of a device according to the first aspect of the invention.
Fig. 3 illustrates a cross section of a preferred embodiment of a device according to the first aspect of the invention, and also illustrates an infrared detector located at an incidence angle α with respect to the device.
Fig. 4 illustrate a preferred embodiment of a system according to the third aspect of the invention.
Fig. 5 illustrates a flow diagram of a preferred embodiment of a method according to the fourth aspect of the invention.
Fig. 6 illustrates a flow diagram of a preferred embodiment of a method according to the fourth aspect of the invention.

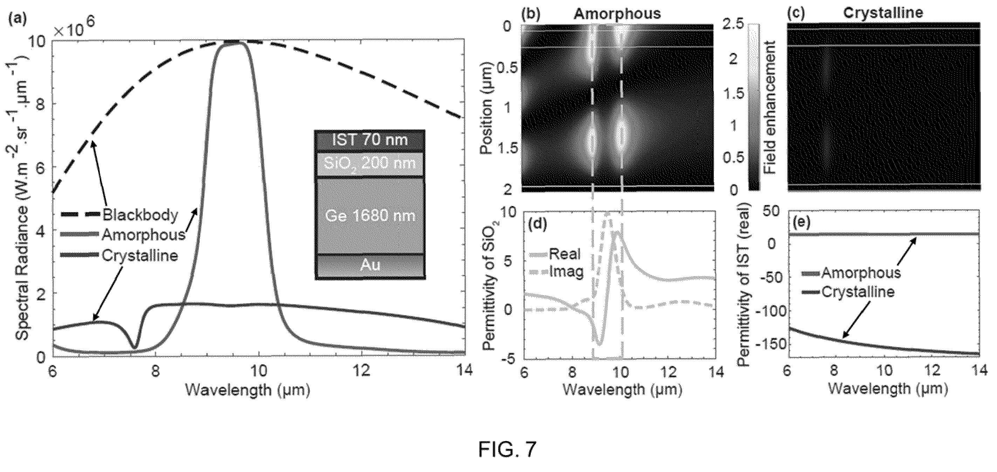

Fig. 7 comprises respective figures (a), (b) and (c) related to a preferred embodiment of a device according to the invention, wherein in said embodiment the phase change material (PCM) is In₃SbTe₂ (IST), and wherein (a) illustrates spectral radiance of the device at 300 K for the PCM in the first or second phase, relative to blackbody radiation, wherein the first phase is an amorphous phase and the second phase is a crystalline phase of the PCM, and the inset of (a) is an illustration of the device; (b) and (c) illustrate field distribution in the device in the amorphous and crystalline phases of the PCM; (d) illustrates complex permittivity of the device's emitter material which is SiO₂; (e) illustrates the real part of the permittivity of the devices PCM in both phases.

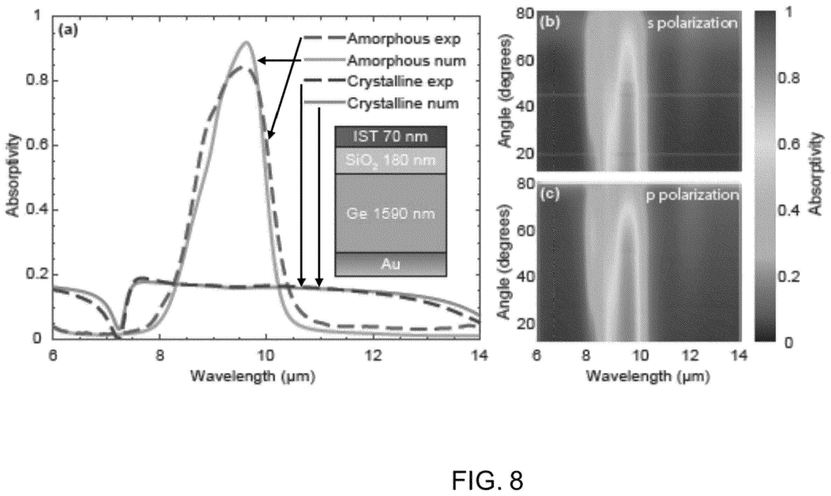

Fig. 8 comprises respective figures (a), (b) and (c) related to a preferred embodiment of a device according to the invention, wherein in said embodiment the phase change material (PCM) is In₃SbTe₂ (IST), and wherein (a) illustrates absorptivity in the first and second phases of the PCM for experimentally measured (dashed lines) and fitted (continuous lines) data, wherein the first phase is an amorphous phase and the second phase is a crystalline phase of the PCM, and the inset of (a) is an illustration of the device; (b) and (c) illustrate the absorptivity in the amorphous phase measured as a function of wavelength and angle (between 15 and 80 degrees) for (b) s and (c) p polarization.
Fig. 9 comprises respective figures (a)-(f) related to checkerboard patterns with various dimensions formed by locally induced phase change of the PCM in a first layer of a preferred embodiment of a device according to the invention, wherein (a-c) illustrate the patterns observed under a microscope, and (d-f) illustrate a measured absorptivity averaged over wavelengths between 9 and 10 µm.
Fig. 10 comprises respective figures (a) and (b) related to a calculated angle-dependent absorptivity of preferred embodiment of a device according to the invention, and specifically (a) and (b) illustrate the absorptivity in the PCM's first phase calculated as a function of wavelength and angle (between 15 and 80 degrees) for (a) s and (b) p polarization.
Fig. 11 comprises respective figures (a)-(d) related to a preferred embodiment of a device according to the invention, wherein in said embodiment the phase change material is In₃SbTe₂ (IST) which has a first phase at which the IST is amorphous, and a second phase at which the IST is crystalline, and (a) illustrates optical image of the fabricated sample with large-scale phase-change patterning, where clST and alST respectively indicate the crystalline and amorphous phases of IST; (b)-(d) illustrate thermal images of the device measured with a LWIR camera at different angles of emission.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing embodiments according to the invention.

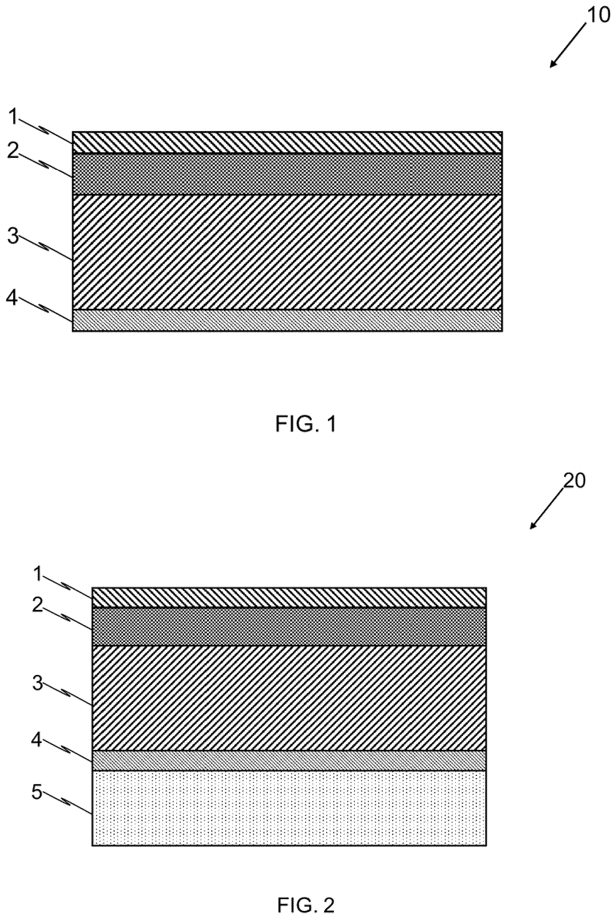

A preferred embodiment of a device according to the first aspect of the invention is explained next with reference to Fig. 1. The device 10 of Fig. 1 comprises a first layer 1, a second layer 2, a third layer 3 and a fourth layer 4. The layers of the device of Fig. 1 are arranged as is illustrated by Fig. 1. Hence, the four layers 1-4 of the device 10 of Fig. 1 form a layered structure. Also, the first layer 1 is made of a phase change material which is changeable, i.e.

it can transition, between a first phase at which the phase change material transmits an infrared radiation, and a second phase at which the phase change material is opaque to the infrared radiation. The second layer 2 is made of an emitter material which is configured to emit the infrared radiation. The third layer 3 is made of a material which transmits the infrared radiation. The fourth layer 4 is configured to reflect the infrared radiation.

The embodiment of Fig. 2 is according to the embodiment of Fig. 1 and additionally comprises a substrate 5, which supports the four layers 1-4 of the device 20. Hence, in the device 20 of Fig. 2 the layers 1-4 and the substrate 5 are arranged in order, from a first side of the device to a device's second side which is opposite the first side, as follows: the first layer 1, the second layer 2, the third layer 3, the fourth layer 4, and the substrate 5. Moreover, the third layer 3 is in contact with the fourth layer 4, the second layer 2 is in contact with the third layer 3, and the first layer 1 is in contact with the second layer 2. Also, each of the substrate 5 and the four layers 1-4 is substantially planar and extends along the direction which is normal to the plane of Fig. 2.

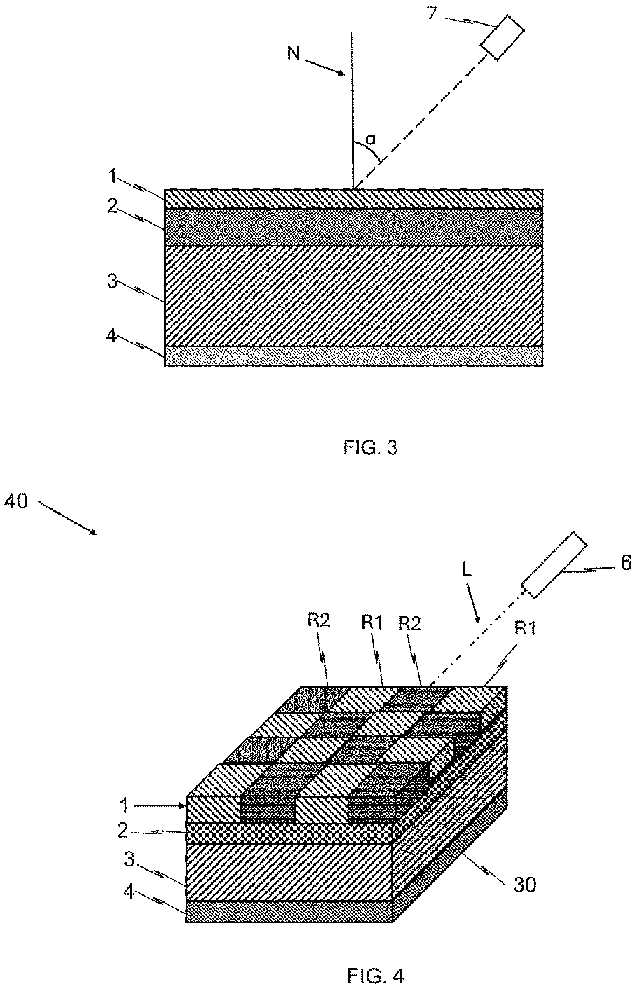

The embodiment of Fig. 3 is according to the embodiment of Fig. 1. Moreover, in the embodiment of Fig. 3 the first layer 1, the second layer 2, the third layer 3 and the fourth layer 4 are planar and configured to cause that, when the phase change material (PCM) is in the first phase, the infrared radiation is emitted via a surface of the first layer 1 towards outside the device such that the full width at half maximum value (FWHM) of a spectral distribution of the emitted infrared radiation is 2 µm or less. The infrared radiation that is emitted towards outside the device via the surface of the first layer 1 can be measured with an appropriate detector 7 which is located at an incidence angle α with respect to the surface of the first layer, as illustrated by Fig. 3. Said incidence angle α may also be called detection angle. As Fig. 3 illustrates, said incidence angle α is measured with respect to the geometrical axis N that is normal to the first surface at the latter's region that is viewed/targeted by the detector 7. The detector 7 is suitable for the measurement of the infrared radiation that can be emitted by the device, and if said radiation is in the LWIR range, then said detector may be thermal LWIR camera i.e. a LWIR camera. Also, in the embodiment of Fig. 3 the aforementioned four layers 1-4 of the device are configured such that, when the PCM is at the first phase, the infrared radiation emitted from the surface of the first layer is in a spectral band from a first wavelength to a second wavelength, the difference between the second wavelength and the first wavelength being the FWHM, and said infrared radiation in said spectral band is emitted via the surface with an emissivity of more than 0.5 or, preferably, more than 0.8. Also, said infrared radiation that is emitted from the device of Fig. 3 is detectable with respect to said surface at any incidence angle α from 0 degrees to at least 75 degrees, and for any polarization.

A preferred embodiment of a system of the third aspect of the invention is explained next with reference to the Fig. 4 which illustrates a system 40 that comprises a device 30 which is according to the embodiments of Fig. 1 and Fig. 3. Also, the system 40 of Fig. 4 comprises phase change inducing means which is a laser 6. The laser 6 is configured to induce a change of the phase change material (PCM) of the first layer 1, between the PCM's first phase and second phase. More specifically, in the embodiment of Fig. 4 the laser 6 is configured to produce a laser beam L which is directed towards the first layer 1 and is suitable for causing a phase change (i.e. a transition) of the phase change material between the first and the second phase. Hence, the laser 6 by irradiating different regions of the surface of the first layer 1 may induce said phase change (transition) locally and selectively at one or more regions of the first layer 1, thereby forming a pattern at the first layer 1. In the embodiment of Fig. 4 said pattern has the form of a checkerboard formed by first regions R1 and second regions R2 of the first layer 1, wherein in the first region R1 the phase material is at its first phase, and in the second regions R2 the phase material is at the second phase. In the system of Fig. 4 the laser is configured to induce a change of the PCM from the first to the second phase, and to also cause a reverse change i.e. from the second to the first phase. For causing the reverse change (i.e. reverse transition) from the second phase to the first one, the laser may be configured to generate a laser beam that has different properties compared to the laser beam used for causing the transition from the first to the second phase, and some of the properties of the laser beam that may be adjusted are the power, the pulse duration and the number of pulses of the laser. A user of the system of Fig. 4 may form on the device 30 patterns of a different shape compared to the one shown in Fig. 4. Also, it may be understood in the system of Fig. 4 that the laser, for forming the pattern, is configured to scan the surface of the first layer. In a non-limiting example such a scanning may be achieved with the use of galvo mirrors.

It is noted that in some other embodiments of a system of the third aspect of the invention, the system comprises phase change inducing means which is different compared to the embodiment of Fig. 4. Particularly, in one embodiment of a system of the third aspect of the invention, the system comprises a device which is according to the embodiment of Fig. 1, and the system further comprises phase change inducing means which comprises a laser source which is configured to produce a laser beam, and the phase change inducing means further comprises one or more diffractive optical elements or patterned masks, wherein the one or more diffractive optical elements or patterned masks is/are configured to transform the laser beam into an illumination pattern which when illuminating a surface of the PCM of the device can induce the occurrence of local changes of the PCM between the first phase and the second phase, resulting to the patterning of the PCM. In the aforementioned optional case that the phase change inducing means comprises a laser beam source and a diffractive optical element, the latter may be configured to modify the spatial distribution of the laser beam and, hence, transform the laser beam into a structured laser pattern.

A preferred embodiment of the second aspect of the invention concerns the use of the patterned device 30 of Fig. 4 as a tag, i.e. a label, attachable on a product by the manufacturer of said product. In the latter embodiment, the infrared radiation that is emitted by the tag is in the LWIR region of the electromagnetic spectrum. In the pattern there is encoded information known to the product's manufacturer. Hence, the tag and the pattern therein are detectable and observable with an LWIR camera which may capture an image of the tag. Said image may be used by the manufacturer or another party for verifying the authenticity and/or obtaining other information related to the product.

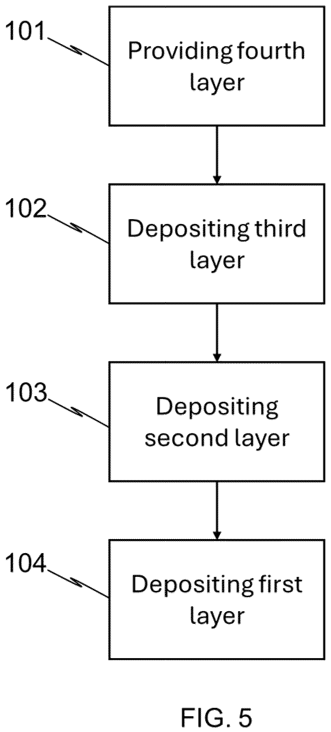

A preferred embodiment of a method according to the fourth aspect of the invention is explained next with reference to Fig. 5. The method of Fig. 5 is implemented for fabricating a device that is according to the device of Fig. 1, and comprises the following:
in step 101, providing the fourth layer 4;
in step 102, depositing (i.e. forming) the third layer 3 on the fourth layer 4;
in step 103, depositing (i.e. forming) the second layer 2 on the third layer 3;
in step 104, depositing (i.e. forming) the first layer 1 on the second layer 2.

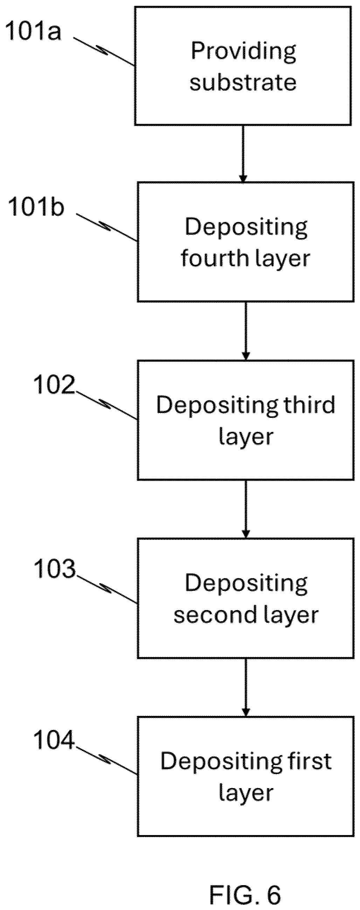

Another preferred embodiment of a method according to the invention is explained next with reference to Fig. 6. The method of Fig. 6 is implemented to fabricate the device 20 of Fig. 2. The method of Fig. 6 comprises the steps of the method of Fig. 5. However, in the embodiment of Fig. 6, step 101 comprises the following sub-steps:
in sub-step 101a, providing a substrate 5; and
in sub-step 101b, depositing (i.e. forming) the fourth layer 4 on the substrate 5.

Next some particular preferred embodiments and properties of the same are described with reference to Fig. 7-11. Each of said particular preferred embodiments concerned by Fig. 7-11 comprises a structure which consists in an IST layer on top of a Salisbury screen: a three-layer Fabry-Perot cavity comprising a SiO₂ thermal emitter, a Ge dielectric spacer and a gold back reflector (see inset of Fig. 7(a)). In the structure illustrated by the inset of Fig. 7(a) the first layer is made of gold, the second layer has a thickness of 1680 nm and is made of germanium, the third layer has a thickness of 200 nm and is made of silicon dioxide, and the fourth layer has thickness of 70 nm and is made of In₃SbTe₂ (IST). In its amorphous state, IST is transparent and the structure behaves as the underlying Salisbury screen, enabling high emissivity in a narrow bandwidth. In its crystalline phase, IST is highly reflective, leading to a low broadband emissivity (see Fig. 7(a)). For Ge, a constant refractive index of 4.03 is considered. The permittivities of IST, SiOz and gold are known in the art. Optical simulations were performed using an in-house transfer matrix model. The architecture of the device of Fig. 7(a) demonstrates high-performance on-off switching of narrowband emission. In the amorphous phase, a bright peak is observed in the region of maximum emission of blackbody radiation at room temperature. The peak is centered at 9.5 µm with a full-width at half maximum (FWHM) of 1.2 µm (Fig. 7(a)). In the crystalline phase, the radiance remains below 20% of the peak emission over the whole LWIR region. In the device of Fig. 7(a) advantageously the emitter material SiO₂ of the device is a widely available material and its resonance peak is around 9.5 µm, close to the thermal wavelength near room temperature (Fig. 7(d)). It is noted that Fig. 7(d) illustrates the real part and the imaginary part of the permittivity of the emitter material SiOz of the device of Fig. 7(a). A thickness of about 150 nm for the SiOz layer may suffice for achieving a unitary emission at the peak of the imaginary part of the permittivity. However, in the device of Fig. 7(a) by employing a slightly thicker emitter, it is possible to broaden the emission peak by splitting the resonance into two (Fig. 7(b)). In the crystalline phase, incoming waves do not penetrate the structure (i.e. the device) of Fig. 7(a), leading to minimal absorption (Fig. 7(c)). Therefore, the emissivity from the device from a region of the PCM when at said region the PCM is in its crystalline phase is low i.e. lower compared to the emissivity of the device via the same region when at the latter the PCM is in its amorphous phase. Also, in the device of Fig. 7(a), the high-index Ge spacer advantageously allows to minimize the required spacer thickness as well as to achieve a diffuse (non-directional) behavior: with a high-index spacer, the phase changes less with angle, making the resonant behavior much less sensitive to the direction. It is noted that a low-index spacer may be used in a similar configuration to achieve highly directional emission. Finally, in the device of Fig. 7(a) the IST thickness may advantageously allow to maximize reflectivity in the metallic phase while ensuring that a phase transition via laser annealing can be triggered through the whole layer. It is noted that Fig. 7(e) illustrates the real part of the permittivity of the IST material of the device of Fig. 7(a), for both the crystalline phase and the amorphous phase of the IST.

Device samples each of which is similar to the previous one and comprises the layered structured shown in the inset of Fig. 8(a) were fabricated via magnetron sputtering deposition. Afterwards, the IST was crystallized over an area 40x40 µm² via direct laser irradiation using a commercially available Photonic Professional GT direct laser writing system from Nanoscribe GmbH & Co. KG. Then optical characterizations of the samples were performed. As per Kirchhoff's law, as absorptivity equal emissivity for all wavelengths, angles, and polarizations, the reflectivity (1 minus absorptivity since there is no transmission) was measured to determine the radiative properties of the sample. Some further details regarding the fabrication and characterization of the structure of Fig. 8(a) are described below.

Each device sample comprises the structure of Fig. 8(a) and was fabricated on a 1×1 cm² silicon substrate previously cleaned in an acetone bath. First, a 3 nm thin chromium adhesion layer followed by 100nm gold layer are thermally evaporated to form on the substrate the mirror, i.e. the fourth layer. Afterwards, magnetron sputtering (LS 320 by von Ardenne) is used to deposit 1590 nm of germanium (base pressure of 6.3^10⁻⁷ mbar, 20 sccm Argon flow, 0.5 Å/s deposition rate and 20 mW power), followed by 180 nm of SiOz (base pressure of 1.58^10⁻⁶ mbar, 20 sccm Argon flow, 0.2 Å/s deposition rate and 20 mW power) and finally 70 nm of amorphous In₃SbTe₂ (base pressure of 9.1^10⁻⁷ mbar, 20 sccm Argon flow, 1 Å/s deposition rate and 20 mW power).

Regarding the laser-induced crystallization of the IST layer, the latter was crystallized with the aforementioned commercially available direct laser writing system. In particular, a 80 MHz pulsed laser with an operation wavelength of 780 nm and 100 fs pulse length is focused by a 20x objective with Numerical Aperture (NA) =0.5 onto the device sample. Precise movements of the laser beam are enabled with movable galvo mirrors. Additionally, a motorized x-y stage allows for movements of the heterostructure (i.e. of the device). For crystallization, a laser scanning speed of 600 µm/s with a laser power of 100 mW were applied.

The device sample was optically characterized with FTIR spectroscopy as follows. The reflectance measurements were performed with a Bruker Vertex 70 spectrometer connected to a Hyperion 2000 microscope equipped with a 15x Cassegrain objective (NA=0.4) featuring an angular range from 10 to 24 degrees. The measured reflectance spectra for varied angle of incidence were performed with a motorized reflection unit A 513/Q allowing for angles between 13 and 85 degrees. A resolution of 4cm⁻¹ with 100 scans was chosen. An infrared polarizer enabled the distinction between s- and p-polarized light. The infrared hyperspectral images are recorded with a focal plane array detector (FPA) with 64x64 pixels and a pixel resolution of 2.7 µm. Here, a resolution of 8 cm⁻¹ and 2000 scans were used. No polarizer was employed for the hyperspectral images. All measurements were referenced to a gold mirror with a reflectivity of 98% in the infrared.

The device was also measured with a thermal camera as follows. A commercially available thermal camera FLIR T335 with a spectral range between 7.5 µm and 13 µm was combined with a 10x objective to image the device. During the measurement, the sample was positioned on a heating plate to set its temperature to 35 °C. The emissivity of the camera was set to a fixed value of 0.3 with a temperature scale ranging from 30 to 50 °C.

Referring to the devices (i.e. the device samples) comprising the layered structure shown in the inset of Fig. 8(a), the absorptivity of the devices in both phases (i.e. both phases of the IST) was measured via Fourier transform infrared spectroscopy (Fig. 8(a), dashed lines). The data were best fitted/modeled assuming a SiOz thickness of 180 nm and a Ge thickness of 1.59 µm (Fig. 8(a), clear lines). An on-off contrast, with a peak absorptivity over 80% and a FWHM of less than 2 µm, is clearly demonstrated by Fig. 8(a).

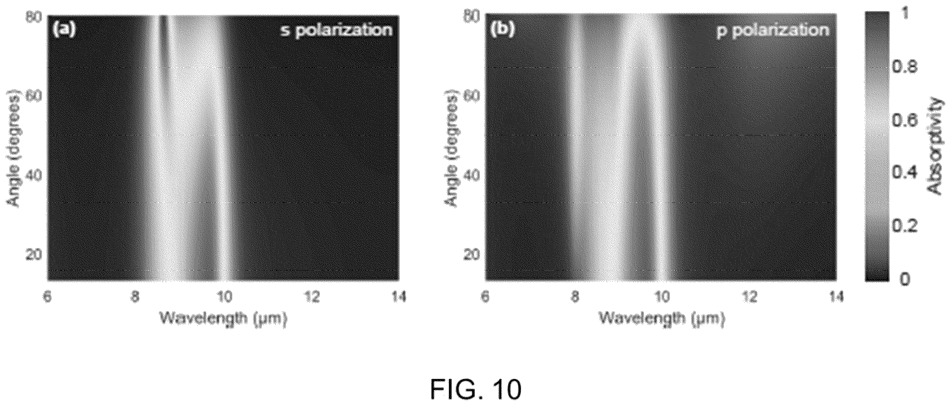

The absorptivity of the device with the layered structure of the inset of Fig. 8(a), with the IST being in the amorphous state, was measured as a function of the angle of incidence, and the results are shown in Fig. 8(b)-(d). Also, the emissivity of the device has been found to be relatively angle-independent up to 50 degrees and is identical for both polarizations. Similar results regarding the same device were obtained from the simulations shown in Fig. 10. Hence, it can be concluded that the device of Fig. 8(a) acts as a bright narrowband source that peaks at the room-temperature thermal wavelength and can be turned on and off by crystallizing the PCM.

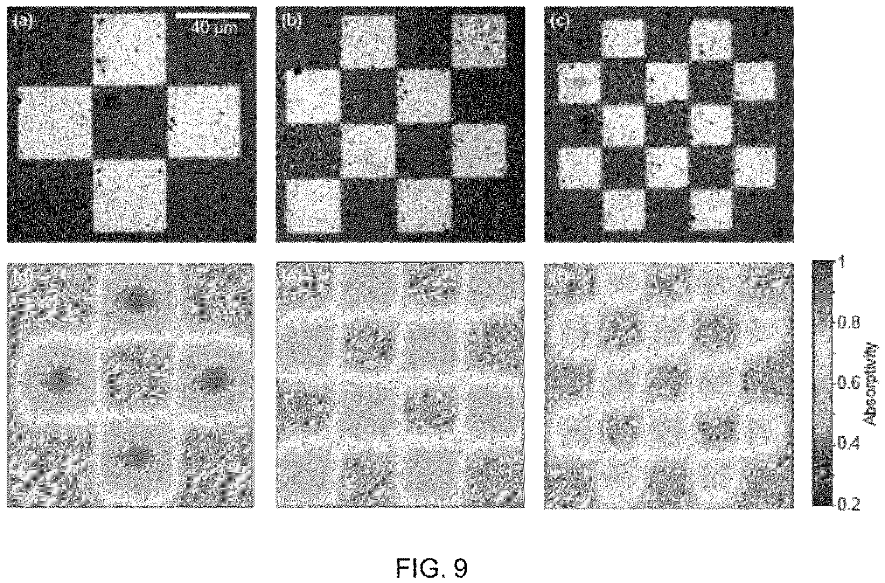

The respective IST layers of three devices which having the same structure as the device of Fig. 8(a) were patterned by means of the commercially available direct laser writing system described further above. In each of said three devices there was fabricated a corresponding one of three checkerboard patterns with periods p = 40, 30, and 20 µm, and light microscope images of the three devices are shown in Fig. 9(a-c) which illustrate said three checkerboard patterns. The pronounced bright rectangles shown in Fig. 9(a-c) correspond to the crystallized phase, while the dark rectangles correspond to the amorphous phase. These devices were also measured using a mercury cadmium telluride (MCT) Focal Plane Array (FPA) detector as mentioned further above. Also, for the same three devices, Fig. 9(d-f) show the corresponding absorptivity maps averaged for wavelengths between 9 and 10 µm. In each of the measured three device samples of Fig. 9 the pattern can easily be resolved down to p ≈ 2λ (where p is period of the pattern and λ is wavelength), approaching the Abbe diffraction limit. This shows the potential for the device to store and display thermal information with a density of 2500 bits/mm².

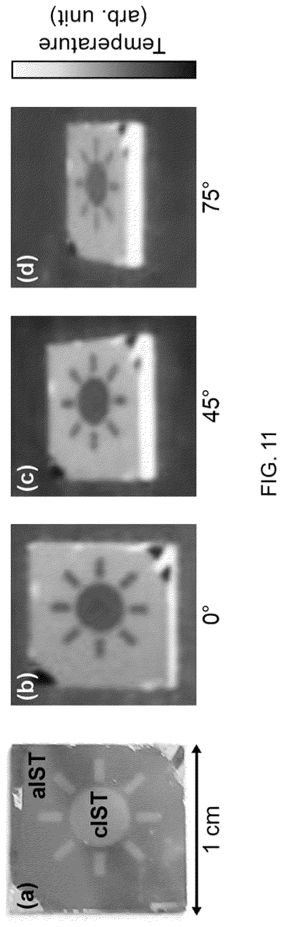

Finally, thermal emission of a custom pattern made on a 1×1 cm² device with the same structure as the device of Fig. 8(a) was demonstrated using a thermal camera. Using the laser writing system, a pattern in the shape of the sun was crystallized on a 1×1 cm² device as illustrated by the optical image in Fig. 11(a). Then, the thermal emission of the device was measured using the aforementioned LWIR camera as described further above for angles of 0, 45 and 75° (Figs. 11(b-d)). The amorphous region displays a higher effective temperature due to the high emissivity of the sample around the thermal wavelength. This behavior changes for the sun shape encoded as crystalline IST, which acts as a mirror with low emissivity around 0.2. Moreover, the emissivity contrast between both phases remains high up to large imaging angles, as expected from Fig. 8(b-c), demonstrating that the encoded pattern can be observed clearly from any direction and does not depend on the imaging angle.

Hence, it can be concluded that each of the embodiments of Fig. 8, Fig. 9 and Fig. 11 is a switchable narrowband thermal emitter based on a lithography-free structure, i.e. the structure of the inset of Fig. 8(a), wherein said structure consists of four layers. The embodiments of Fig. 8, Fig. 9 and Fig. 11 emit in all polarizations and directions within a spectral bandwidth of 1.2 µm centered around 9.5 µm, making them ideal for at least some applications where high detectability is desirable, such as for labelling and security applications. Also, patterning of the devices of Fig. 9 and Fig. 11 was achieved through laser annealing and with a resolution, measured by thermal imaging, down to 20 µm (≈ 2λ). The stack (i.e. the layered structure) of the devices of Fig. 8, Fig. 9 and Fig. 11 may be deposited on a surface of a substrate that can withstand temperatures up to 300°C.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

Research leading to these results has received funding from: PID2021-125441OA-I00 project funded by MCIN /AEI /10.13039/501100011033/ FEDER, UE

## Claims

1. A device for emitting infrared radiation, the device comprising the following layers which are arranged in order as follows:
a first layer (1) made of a phase change material which is changeable between a first phase at which the phase change material transmits an infrared radiation, and a second phase at which the phase change material is opaque to the infrared radiation;
a second layer (2) made of an emitter material configured to emit the infrared radiation;
a third layer (3) made of a material which transmits the infrared radiation;
a fourth layer (4) configured to reflect the infrared radiation.

2. A device according to claim 1, wherein a transition of the phase change material between the first phase and the second phase is non-volatile.

3. A device according to any of the preceding claims, wherein the phase change material is indium antimony telluride or vanadium dioxide.

4. A device according to any of the preceding claims, wherein a central wavelength of a spectral width of the infrared radiation is comprised between 7 µm and 40 µm, preferably between 8 µm and 14 µm.

5. A device according to any of the preceding claims wherein the first layer (1), the second layer (2), the third layer (3) and the fourth layer (4) are planar and configured to cause that, when the phase change material is in the first phase, the infrared radiation is emitted via a surface of the first layer (1) towards outside the device such that a full width at half maximum value of a spectral distribution of the emitted infrared radiation is 2 µm or less, and more preferably such that the infrared radiation in a spectral band from a first wavelength to a second wavelength, the difference between the second wavelength and the first wavelength being the full width at half maximum value, is emitted via the surface with an emissivity of more than 0.5 and the infrared radiation is detectable with respect to said surface at any incidence angle (α) from 0 degrees to at least 50 degrees and, most preferably, for any polarization.

6. A device according to any of the preceding claims, wherein the emitter material is a polar material, preferably the emitter material comprising any of silicon dioxide, silicon carbide, silicon nitride, aluminum oxide, aluminum nitride, hexagonal boron nitride, alpha-phase molybdenum trioxide, or a combination thereof.

7. A device according to any of the preceding claims, wherein the phase change material is configured to change between the first phase and the second phase under an application of heat or radiation to the phase change material, preferably said radiation being laser radiation.

8. A device according to any of the preceding claims, wherein the first layer (1), the second layer (2), the third layer (3) and the fourth layer (4) form a Fabry-Perot cavity, and the infrared radiation comprises a radiation component at a frequency which is equal to a resonance frequency of the Fabry-Perot cavity, preferably said radiation component being of a wavelength which is equal to a central wavelength of the infrared radiation, more preferably said radiation component and the resonance frequency of the Fabry-Perot cavity being equal to a resonance frequency of the emitter material.

9. A device according to any of the preceding claims, wherein a spectral width of the infrared radiation covers a spectral region of maximum emission of a blackbody radiation, preferably a central wavelength of the spectral width being within said spectral region of maximum emission, more preferably the blackbody radiation being at a room temperature comprised between 20°C to 25°C.

10. A device according to any of the preceding claims, wherein a thickness of the first layer (1) is comprised between 10 nm and 200 nm, a thickness of the second layer (2) is comprised between 2 nm and 300 nm, a thickness of the third layer (3) is comprised between 1 µm and 5 µm, and a thickness of the fourth layer (4) is at least 30 nm.

11. Use of a device which is according to any of the preceding claims as a source of infrared radiation or for any of storing information, labeling a product, tracking or marking a product, preventing the counterfeiting of a product or of an industrial process, or for detection of gases.

12. A system comprising a device according to any of claims 1 to 10, and phase change inducing means configured to induce a change of the phase change material between the first phase and the second phase, preferably said phase change inducing means comprising a laser (6) or a heater.

13. A system according to claim 12, wherein the phase change inducing means is configured to induce the change of the phase change material locally and selectively at one or more regions of the first layer (1) for, thereby, forming a pattern at the first layer (1).

14. A method for fabricating a device which is according to any of claims 1 to 10, the method comprising:
providing the fourth layer (4);
depositing the third layer (3) on the fourth layer (4);
depositing the second layer (2) on the third layer (3); and,
depositing the first layer (1) on the second layer (2).

15. A method according to claim 14, wherein providing the fourth layer (4) comprises providing a substrate (5); and depositing the fourth layer (4) on the substrate (5).
